# EUROPÄISCHE PATENTSCHRIFT

(11) **EP 1 824 691 B1**
(45) Veröffentlichungstag und Bekanntmachung des Hinweises auf die Patenterteilung: **11.02.2009**
(21) Anmeldenummer: 05817962.3
(22) Anmeldetag: 16.12.2005
(51) Int. Cl.: B60D 1/62, B62D 53/12

(54) **SYSTEM ZUM VERBINDEN VON VERSORGUNGSLEITUNGEN**
SYSTEM FOR CONNECTING SUPPLY LINES
SYSTÈME SERVANT À CONNECTER DES LIGNES D'ALIMENTATION

(30) Priorität: 17.12.2004 DE 102004062172
(43) Veröffentlichungstag der Anmeldung: 29.08.2007
(73) Patentinhaber: Jost-Werke GmbH, 63263 Neu-Isenburg (DE)
(72) Erfinder: ALGÜERA, Gallego, José, Manuel, 63739 Aschaffenburg (DE)
(74) Vertreter: Fuchs
(86) Internationale Anmeldenummer: PCT/EP2005/013579
(87) Internationale Veröffentlichungsnummer: WO 2006/066819

(56) Entgegenhaltungen:
- EP-A- 0 983 932
- DE-A1- 10 155 056
- US-A- 5 660 408

## Beschreibung

Die Erfindung betrifft ein System zum Verbinden von Versorgungsleitungen zwischen einem Zugfahrzeug und einem daran kuppelbaren Auflieger, wobei an dem Zugfahrzeug eine Sattelkupplung und ein automatisiertes Leitungskupplungssystem mit mindestens einer Steckerbuchse angeordnet, ist, und der Auflieger mindestens einen Versorgungskreis aufweist, der zur Anbindung an das Zugfahrzeug einen komplementär zu der Steckerbuchse ausgebildeten Stecker und/oder eine erste Versorgungskonsole zur Aufnahme eines an mindestens einer Versorgungsleitung des Zugfahrzeugs angeordneten Steckelementes umfasst.

An den heute überwiegend im Einsatz befindlichen Sattelzügen sind Zugfahrzeug und Auflieger über flexible Versorgungsleitungen miteinander verbunden, über die eine elektrische und pneumatische Versorgung des Aufliegers realisiert wird. Darüber hinaus ist es möglich, auch Steuersignale oder eine hydraulische Versorgung des Aufliegers über entsprechende Versorgungsleitungen sicherzustellen. Das Ankuppeln der Versorgungsleitungen erfolgt von Hand, in dem ein an der Versorgungsleitung befindliches Steckelement an der ersten Versorgungskonsole angesteckt wird. Vor dem Abkuppeln des Aufliegers werden die Versorgungsleitungen getrennt und die losen Steckelemente üblicherweise in zugfahrzeugseitig angebrachte Parksteckleisten eingehängt und darin für eine Fahrt ohne Auflieger geschert. Einen derartigen Stand der Technik offenbart die GB 2 204 844 A.

Zur Reduzierung des Bedienaufwandes sind inzwischen automatisierte Leitungskupplungssysteme entsprechend der DE 101 55 056 A1 bekannt geworden, die inzwischen auch in nennenswertem Umfang genutzt werden. Ein derartiges System kann beispielsweise einen an den Königszapfen des Aufliegers angreifenden Steckerkeil umfassen der während des Ankuppelns in die Einfahröffnung der Sattelkupplung eingefahren wird. Anschließend wird motorisch eine lateral verschiebbare Steckerbuchse zur Kontaktierung in den Steckerkeil eingeschoben. In anderen Systemen stoßen durch den Ankuppelvorgang von Zugmaschine und Auflieger ortsfest angebrachte Stecker und Steckerbuchsen ineinander.

Die ursprünglichen, von Hand betätigten Systeme mit einer oder mehreren Versorgungsleitung(en) und einem daran jeweils befindlichen Steckelement, welches an die erste Versorgungskonsole angesteckt wird, könnten durch diese neuen automatisierten Leitungskupplungssysteme vollständig ersetzt werden. Dieses würde aus Kompatibilitätsgründen jedoch voraussetzen, dass alle Zugmaschinen und Auflieger einer Fahrzeugflotte vollständig mit automatisierten Leitungskuppiungssystemen umgerüstet würden. Andernfalls könnte es in gemischten Fuhrparks vorkommen, dass beispielsweise ein bereits umgerüstetes Zugfahrzeug einen konventionellen Auflieger nicht mit Energie und Steuersignalen versorgen kann.

Aus diesem, Grund liegt der Erfindung die Aufgabe zugrunde, ein System zum Verbinden von Versorgungsleitungen für Zugfahrzeuge mit einem automatisierten Leitungskupplungssystem bereitzustellen, welches gleichfalls ein Aufsatteln konventioneller Auflieger ermöglicht.

Die Aufgabe wird erfindungsgemäß mit einem System gelöst, bei dem zur Anbindung des Versorgungskreises an das Zugfahrzeug anstelle oder ergänzend zu dem Stecker eine erste Versorgungskonsole zur Aufnahme eines an mindestens einer Versorgungsleitung des Zugfahrzeugs angeordneten Steckelementes vorgesehen ist und bei dem an dem Zugfahrzeug eine zweite Versorgungskonsole angeordnet ist,
die stetig mit der Steckerbuchse des automatisierten Leitungskupplungssystems verbunden ist, **wobei** das Steckelement wahlweise an der ersten oder zweiten Versorgungskonsole ansteckbar ist.

Die zweite Versorgurigskonsole entspricht baulich weit gehend der ersten Versorgungskonsole, die üblicherweise an der Frontseite des Aufliegers montiert ist. Für den Fall, dass mit dem Zugfahrzeug ein ebenfalls mit einem Leitungskupplungssystem ausgerüsteter Auflieger gezogen werden soll, erfolgt die Versorgung des Aufliegers zum Beispiel mit Energie und Signalen über die Versorgungsleitung und das daran befindliche Steckelement zu der zweiten Versorgungskonsole, von dort zu der Steckerbuchse des automatisierten Leitungskupplungssystems, die im angekuppelten Zustand bereits in den aufliegerseitigen Stecker eingefahren ist. Ausgehend von dem Stecker wird der jeweilige Energie- oder Signalversorgungskreis des Aufliegers gespeist.

Soll jedoch statt dessen ein Auflieger bewegt werden, der nicht über Komponenten des automatisierten Leitungskupplungssystems verfügt, kann die Verbindung der Versorgungsleitung und des daran befindlichen Steckelementes von der zweiten Versorgungskonsole gelöst und direkt an der ersten Versorgungskonsole des Aufliegers angeschlossen werden.

Vorzugsweise ist in dem Versorgungskreis ein Verteiler, mit einem ersten und zweiten Leitungszweig angeordnet, wobei der erste Leitungszweig mit der ersten Versorgungskonsole und der zweite Leitungszweig mit dem Stecker permanent verbunden sind. Dieses hat den Vorteil, dass entsprechend ausgerüstete Auflieger sowohl von Zugfahrzeugen mit einem Leitungskupplungssystem als auch konventionell ausgestatteten Zugfahrzeugen aufgesattelt werden könnten. Bei den konventionell ausgerüsteten Zugfahrzeugen erfolgt die Anbindung des Versorgungskreises über die erste Versorgungskonsote und den ersten Leitungszweig, bei Zugfahrzeugen mit einem automatisierten Leitungskupplungssystem über den Stecker und den zweiten Leitungszweig.

In dem Verteiler und/oder dem ersten Leitungszweig und/oder dem zweiten Leitungszweig sollte ein Rückschlagventil angeordnet sein, welches ein Rückfließen von Druckluft aus einem Leitungszweig in den anderen verhindert.

Bei einer vorteilhaften Ausführungsform ist die zweite Versorgungskonsole über eine ortsfeste Zuleitung mit der Steckerbuchse verbunden. Diese ist robuster als eine flexible Schlauch- oder Kabelverbindung und kann räumlich vorteilhaft an dem Zugfahrzeug verlegt sein.

Günstigerweise ist die zweite Versorgungskonsole auf der Rückseite eines Führerhauses des Zugfahrzeuges angeordnet.

Ebenso hat es sich als vorteilhaft erwiesen, wenn mehrere Versorgungsleitungen an einer Sammelkonsole zusammengefasst sind und die Sammelkonsole an Fahrzeugleitungen angeschlossen ist. Die Sammelkonsole sollte in räumlicher Nähe zu der aufliegerseitigen ersten Versorgungskonsole ausgerichtet sein, das heißt auf selber Höhe an dem Zugfahrzeug gegenüberliegend montiert.

In einer besonders günstigen konstruktiven Ausgestaltung erfolgt über die mindestens eine Versorgungsleitung und/oder das automatisierte Leitungskupptungssystem eine Übertragung von elektrischer Energie, Druckluft und/oder Steuersignalen.

Im Hinblick auf einen erhöhten Bedienkomfort kann die zweite Versorgungskonsole seitlich versetzt zu der Fahrzeugmittelachse in Reichweite eines neben dem Zugfahrzeug stehenden Bedieners angeordnet sein.

Zum besseren Verständnis wird die Erfindung nachfolgend anhand von drei Zeichnungsfiguren näher erläutert. Dabei zeigt die
- **Fig. 1:**: eine schematische Seitenansicht auf ein Zugfahrzeug und einen Auflieger mit einem vergrößert dargestellten automatisierten Leitungskupplungssystem;
- **Fig. 2:**: eine Ansicht gemäß Fig. 1 auf ein mit einem Leitungskupplungssystem ausgerüstetes Zugfahrzeug und einen daran gekuppelten Auflieger ohne Leitungskupplungssystem; und
- **Fig. 3:**: eine Ansicht auf ein Zugfahrzeug und einen Auflieger gemäß Fig. 1 mit einem ersten und zweiten Leitungszweig.

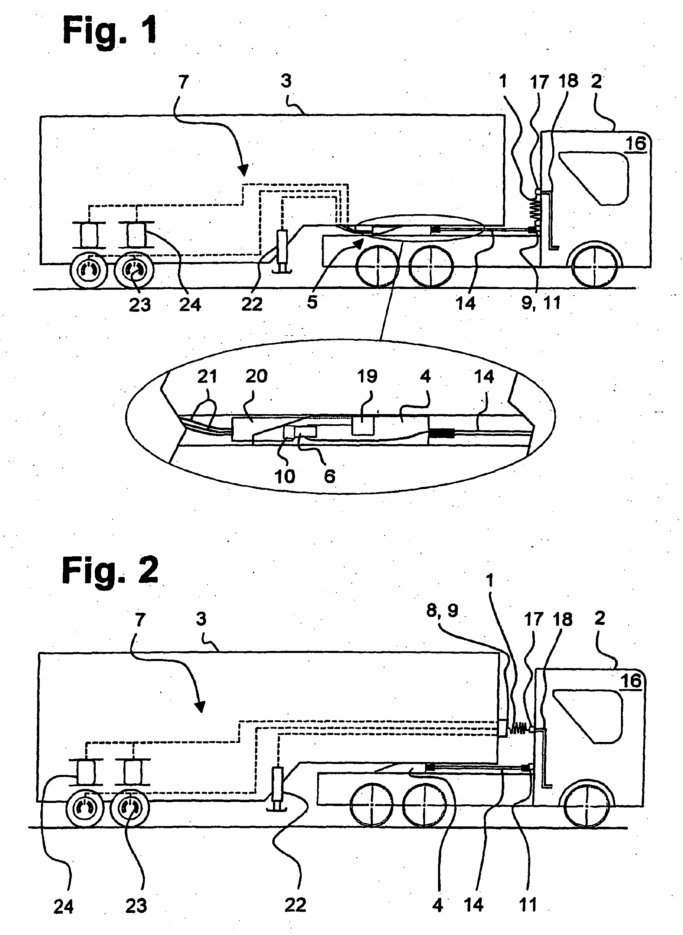

Die Figur 1 zeigt in einer schematischen Seitenansicht ein Zugfahrzeug 2 und einen über eine Sattelkupplung 4 und einen Königszapfen19 daran befestigten Auflieger 3. An dem Auflieger 3 sind mehrere Verbraucher angeordnet, die mit elektrischer Energie und Druckluft versorgt werden müssen. Zu den Verbrauchern zählen paarweise angebrachte elektrisch angetriebene Stützwinden 22, die darüber hinaus über ein nicht weiter dargestelltes Bus-System Steuersignale von dem Zugfahrzeug 2 erhält, eine Aufliegerbremse 23 sowie eine Luftfederung 24.

Das Zugfahrzeug 2 und der Auflieger 3 sind beide mit einem automatisierten Leitungskupplungssystem 5 ausgestattet, welches im vorliegenden Fall die an der Sattelkupplung 4 vergrößert herausgezeichneten Komponenten umfasst. Der Auflieger 3 ist über den in der Sattelkupplung 4 fixierten Königszapfen 19 mit dem Zugfahrzeug 2 mechanisch verbunden. An dem Königszapfen 19 greift schwenkbar gelagert ein Steckerteil 20 an, der nach hinten aus einer nicht dargestellten keilförmige Einfahröffnung der Sattelkupplung 4 herausragt. Dieser Steckerkeil 20 ist aufgrund seiner komplementär zu der Einfahröffnung gestalteten Formgebung in der Sattelkupplung 4 fixiert, so dass es zu keiner nennenswerten Relativbewegung zwischen Steckerkeil 20 und Sattelkupplung 4 kommt. In einer an der Sattelkupplung 4 anliegenden Seitenwand des Steckerkeiles 20 befindet sich ein ortsfest angeordneter Stecker 10, in den eine lateral verfahrbare Steckerbuchse 6 eingefahren ist, wodurch eine Verbindung hergestellt wurde. Über rückseitig aus dem Steckerkeil 20 geführte Aufliegerleitungen 21 ist der Versorgungskreis 7 des Aufliegers 3 an den Stecker 10 angeschlossen. Die Aufliegerleitungen 21 sind derart bemessen, dass sie bei Kurvenfahrten ein Ausschwenken des Aufliegers 3 gegenüber dem Zugfahrzeug 2 zulassen.

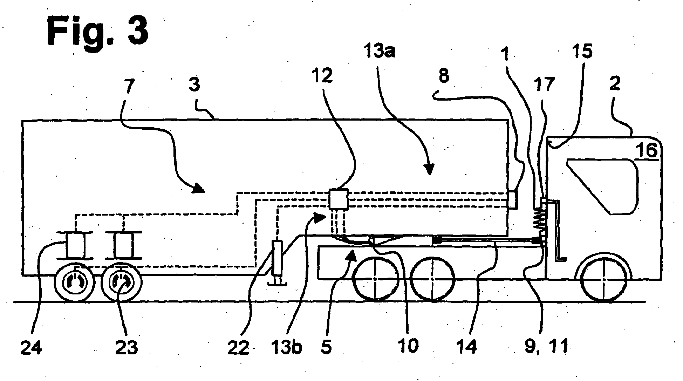

Für die Versorgung des Aufliegers 3 sind an dem Zugfahrzeug 2 entsprechende Aggregate vorgesehen, die in bekannter Art und Weise über mehrere Fahrzeugleitungen, von denen exemplarisch eine Fahrzeugleitung 18 dargestellt ist, elektrische Energie beziehungsweise Druckluft an eine an der Rückseite 15 (siehe Figur 3) des Führerhauses 16 Sammelkonsole 17 heranführen. An der Sammelkonsole 17 sind mehrere Versorgungsleitungen 1 angeschlossen, von denen eine Versorgungsleitung 1 zu erkennen ist.

In der gezeigten Fallkonstellation gemäß der Figur 1, bei der sowohl das Zugfahrzeug 2 als auch der Auflieger 3 für einen Betrieb mit einem automatisierten Leitungskupplungssystem 5 ausgestattet sind, ist die Versorgungsleitung 1 mit ihrem endseitig montierten Steckelement 9 an einer zweiten Versorgungskonsole 11 angeschlossen. An der zweiten Versorgungskonsole 11 greift eine ortsfest auf dem Zugfahrzeug 2 angebrachte Zuleitung 14 an, über welche die benötige elektrische Energie oder Druckluft bis an die Steckerbuchse 6 geleitet wird.

Eine andere Fallkonstellation verdeutlicht Figur 2. Hierbei weist das Zugfahrzeugs 2 die nicht näher bezeichneten Komponenten des automatisierten Leitungskupplungssystems 5 auf. Der Auflieger 3 ist jedoch konventionell ausgestattet und muss über von Hand anzuschließende Versorgungsleitungen 1 mit dem Zugfahrzeug 2 verbunden werden. Hierzu wird das Steckelement 9 von der zweiten auf dem Zugfahrzeug 2 befindlichen Versorgungskonsole 11 gelöst und stattdessen die Versorgungsleitung 1 mit dem Steckelement 9 unmittelbar an einer ersten Versorgungskonsole. 8 des Aufliegers 3 angeschlossen. Bei dieser Anbindung des Aufliegers 3 ist die zweite, Versorgungskonsole 11 und die Zuleitung 14 nicht mit elektrischer Energie, Steuersignalen oder Druckluft beaufschlagt. Auch wenn die Vorteile eines automatischen Leitungskupplungssystems 5 bei dieser Konstellation nicht ausgeschöpft werden können, ist es möglich, dennoch den Auflieger 3 an das Zugfahrzeug 2 konventionell anzuschließen und zu bewegen.

Die Figur 3 stellt einen modifizierten Auflieger 3 dar, der besonders einfach an Zugfahrzeugen 2 mit oder ohne Komponenten eines automatisierten Leitungskupplungssystems 5 betrieben werden kann. In der Figur 3 sind beispielhaft sowohl das Zugfahrzeug 2 als auch der Auflieger 3 mit einem automatisierten Leitungskupplungssystem 5 ausgerüstet. Die Versorgung des Aufliegers 3 findet daher über die an der zweiten Versorgungskonsole 11 angeschossene' Versorgungsleitung 1, die Zuleitung 14, das automatisierte Leitungskupplungssystem 5 und die Aufliegerleitungen 21 (siehe vergrößerter Ausschnitt in Figur 1) statt, die in einen zweiten Leitungszweig 13b übergehen. Der zweite Leitungszweig 13b mündet in einem Verteiler 12, der in den Versorgungskreis 7 integriert ist. An dem Verteiler 12 ist darüber hinaus ein erster Leitungszweig 13a angeschlossen, der zu der Vorderseite des Aufliegers 3 verläuft und an der ersten Versorgungskonsole 8 endet. Dieser erste Leitungszweig 13a ist bei einer Versorgung des Aufliegers 3 über das automatisierte Leitungskupplungssystem 5 tot, wird jedoch benötigt, um den Auflieger 3 gegebenenfalls über die erste Versorgungskonsole 8 mit einem Zugfahrzeug 2 ohne automatisiertes Leitungskupplungssystem anschließen zu können.

### Bezugszeichenllste

- 1: Versorgungsleitung
- 2: Zugfahrzeug
- 3: Auflieger
- 4: Sattelkupplung
- 5: Automatisiertes Leitungskupplungssystem
- 6: Steckerbuchse
- 7: Versorgungskreis Auflieger
- 8: Erste Versorgungskonsole
- 9: Steckelement
- 10: Stecker
- 11: Zweite Versorgungskonsole
- 12: Verteiler
- 13a: Erster Leitungszweig
- 13b: Zweiter Leitungszweig
- 14: Zuleitung
- 15: Rückseite Führerhaus
- 16: Führerhaus
- 17: Sammelkonsole
- 18: Fahrzeugleitung
- 19: Königszapfen
- 20: Steckerkeil
- 21: Aufliegerleitung
- 22: Stützwinde
- 23: Aufliegerbremse
- 24: Luftfederung

## Patentansprüche

1. System zum Verbinden von Versorgungsleitungen (1) zwischen einem Zugfahrzeug (2) und einem daran kuppelbaren Auflieger (3), wobei an dem Zugfahrzeug (2)
- eine Sattelkupplung (4) und
- ein automatisiertes Leitungskupplungssystem (5) mit mindestens einer Steckerbuchse (6) angeordnet ist,
und der Auflieger (3) mindestens einen Versorgungskreis (7) aufweist, der zur Anbindung an das Zugfahrzeug (2) einen komplementär zu der Steckerbuchse (6) ausgebildeten Stecker (10) und/oder eine erste Versorgungskonsole (8) zur Aufnahme eines an mindestens einer Versorgungsleitung (1) des Zugfahrzeugs (2) angeordneten Steckelementes (9) umfasst,
**dadurch gekennzeichnet,**
**dass** an dem Zugfahrzeug (2) eine zweite Versorgungskonsole (11) angeordnet, ist, die stetig mit der Steckerbuchse (6) des Leitungskupplungssystems (5) verbunden ist, und das Steckelement (9) wahlweise an der ersten oder zweiten Versorgungskonsole (8, 11) ansteckbar ist.

2. System nach Anspruch 1, **dadurch gekennzeichnet, dass** in dem Versorgungskreis (7) ein Verteiler (12) mit einem ersten und zweiten Leitungszweig (13a, 13b) angeordnet ist, wobei der erste Leitungszweig (13a) mit der ersten Versorgungskonsole (8) und der zweite Leitungszweig (13b) mit dem Stecker (10) permanent verbunden sind.

3. System nach Anspruch 2, **dadurch gekennzeichnet, dass** in dem Verteiler (12) und/oder dem ersten Leitungszweig (13a) und/oder dem zweiten Leitungszweig (13b) ein Rückschlagventil angeordnet ist.

4. System nach einem der Ansprüche 1 oder 3, **dadurch gekennzeichnet, dass** die zweite Versorgungskonsole (11) über eine ortsfeste Zuteilung (14) mit der Steckerbuchse (6) verbunden ist.

5. System nach einem der Ansprüche 1 bis 4, **dadurch gekennzeichnet, dass** die zweite Versorgungskonsole (11) auf der Rückseite (15) eines Führerhauses (16) des Zugfahrzeuges (2) angeordnet ist.

6. System nach einem der Ansprüche 1 bis 5, **dadurch gekennzeichnet, dass** mehrere Versorgungsleitungen (1) an einer Sammelkonsole (17) zusammengefasst sind und die Sammelkonsole (17) an Fahrzeugleitungen (18) angeschlossen ist.

7. System nach einem der Ansprüche 1 bis 6, **dadurch gekennzeichnet, dass** über die mindestens eine Versorgungsleitung (1) und/oder das automatisierte Leitungskupplungssystem (5) eine Übertragung von elektrischer Energie, Druckluft und Steuersignalen erfolgt.

8. System nach einem der Ansprüche 1 bis 7, **dadurch gekennzeichnet, dass** die zweite Versorgungskonsole (11) seitlich versetzt zu der Fahrzeugmittelachse in Reichweite eines neben dem Zugfahrzeug (2) stehenden Bedieners angeordnet ist.

## Claims

1. System for connecting of supply lines (1) between a tractor (2) and a semi-trailer (3) which can be coupled thereto, wherein
- a fifth wheel (4) and
- an automated line coupling system (5) with at least one jack connection (6)
is arranged on the tractor (2),
and the semi-trailer (3) has at least one power supply circuit (7), comprising a plug (10) fashioned complementary to the jack connection (6) and/or a first supply console (8) for connecting to the tractor (2), receiving a plug-in element (9) arranged on at least one supply line (1) of the tractor (2),
**characterized in that**
a second supply console (11) is arranged on the tractor (2), being constantly connected to the jack connection (6) of the fine coupling system (5), and the plug-in element (9) can be optionally inserted at the first or second supply console (8, 11).

2. System according to claim 1, **characterized in that** a distributor (12) with a first and second line branch (13a, 13b) is arranged in the supply circuit (7), wherein the first line branch (13a) is permanently connected to the first supply console (8) and the second line branch (13b) to the plug (10).

3. System according to claim 2, **characterized in that** a check valve is arranged in the distributor (12) and/or the first line branch (13a) and/or the second line branch (13b).

4. System according to any one of claims 1 to 3, **characterized in that** the second supply console (11) is connected by a permanent feed line (14) to the jack connection (6).

5. System according to any one of claims 1 to 4, **characterized in that** the second supply console (11) is arranged on the rear (15) of the driver's cabin (16) of the tractor (2).

6. System according to any one of claims 1 to 5, **characterized in that** several supply lines (1) are brought together on a shared console (17) and the shared console (17) is connected to vehicle lines (18).

7. System according to any one of claims 1 to 6, **characterized in that** a transmission of electric power, compressed air, and control signals occurs via the at least one supply line (1) and/or the automated line coupling system (5).

8. System according to any one of claims 1 to 7, **characterized in that** the second supply console (11) is set off to the side from the center axis of the vehicle within reach of an operator standing next to the tractor (2).

## Revendications

1. Système destiné à relier des lignes d'alimentation (1) entre un véhicule tracteur (2) et une semi-remorque (3) destinée à être couplée à celui-ci, sachant que sur le véhicule tracteur (2) sont disposés
- une sellette de couplage (4) et
- un système automatisé de couplage des lignes (5) avec au moins une fiche femelle (6),
et la semi-remorque (3) comporte au moins un circuit d'alimentation (7) qui, en vue du raccordement au véhicule tracteur (2), comporte une fiche mâle (10) réalisée de manière complémentaire à la fiche femelle (6) et/ou une première console d'alimentation (8) destinée à recevoir un élément d'enfichage (9), disposé sur au moins une ligne d'alimentation (1) du véhicule tracteur (2),
**caractérisé en ce que** sur le véhicule tracteur (2) est disposée une deuxième console d'alimentation (11), qui est reliée en continu avec la fiche femelle (6) du Système de couplage des lignes (5), et l'élément d'enfichage (9) peut être raccordé au choix à la première ou à la deuxième console d'alimentation (8, 11).

2. Système selon la revendication 1, **caractérisé en ce que** dans le circuit d'alimentation (7) est agencé un répartiteur (12) avec une première et une deuxième branche de lignes (13a, 13b), la première branche de lignes (13a) étant raccordée en continu avec la première console d'alimentation (8) et la deuxième branche de ligne (13b) étant raccordée en continu avec la fiche mâle (10).

3. Système selon la revendication 2, **caractérisé en ce que** dans le répartiteur (12) et/ou dans la première branche de lignes (13a) et/ou dans la deuxième branche de lignes (13b) est disposé un clapet de non-retour.

4. Système selon l'une quelconque des revendications 1 à 3, **caractérisé en ce que** la deuxième console d'alimentation (11) est liée à la fiche femelle (6) via une ligne d'admission (14) stationnaire.

5. Système selon l'une quelconque des revendications 1 à 4, **caractérisé en ce que** la deuxième console d'alimentation (11) est disposée sur lé côté arrière (15) d'une cabine (16) du véhicule tracteur (2).

6. Système selon l'une, quelconque des revendications 1 à 5, **caractérisé en ce que** plusieurs lignes d'alimentation (1) sont regroupées sur une console collectrice (17) et la console collectrice (17) est raccordée à des lignes du véhicule (18).

7. Système selon l'une quelconque des revendications 1 à 6, **caractérisé en ce qu'**une transmission d'énergie électrique, d'air comprimé et de signaux de commande s'effectue via ladite au moins une ligne d'alimentation (1) et/ou le système automatisé de couplage des lignes (5).

8. Système selon l'une quelconque des revendications 1 à 7, **caractérisé en ce que** la deuxième console d'alimentation (11) est montée en étant décalée latéralement par rapport à l'axe médian du véhicule à portée d'un utilisateur debout à côté du véhicule tracteur (2).
